# EUROPEAN PATENT APPLICATION

(11) **EP 3 780 868 A1**
(43) Date of publication of application: **17.02.2021**
(21) Application number: 19792975.5
(22) Date of filing: 23.04.2019
(51) Int. Cl.: H04W 74/08, H04W 74/00

(54) **CHANNEL ACCESS METHOD, USER DEVICE, BASE STATION, AND RELATED DEVICE**

(30) Priority: 25.04.2018 CN 201810382181
(71) Applicant: HUAWEI TECHNOLOGIES CO., LTD., Shenzhen, Guangdong 518129 (CN)
(72) Inventor: ZHANG, Pan, Shenzhen, Guangdong 518129 (CN); ZHANG, Xingxin, Shenzhen, Guangdong 518129 (CN); WANG, Xuehuan, Shenzhen, Guangdong 518129 (CN)
(74) Representative: Gill Jennings & Every LLP
(86) International application number: PCT/CN2019/083794
(87) International publication number: WO 2019/206108

(57) **Abstract**

Embodiments of this application disclose a channel access method, user equipment, a base station, and a related device, to improve channel transmission quality. The method in the embodiments of this application includes: receiving, by UE, first information sent by a base station, where the first information is used to indicate directions of data received by the base station in different time periods; maintaining, by the UE, a first list, where the first list includes a sequence of the directions in which the base station receives the data, the sequence is used to indicate channel quality when the base station receives, in the different directions, the data sent by the UE, and a first direction is a direction ranked first when the base station receives, in the first time period, the data sent by the UE; receiving, by the UE, second information sent by the base station, where the second information is used to indicate listening durations required by the UE to listen on a channel in the different directions in the first list, and a listening duration corresponding to a direction ranked higher is shorter; when the first time period starts, determining, by the UE based on the second information, a first listening duration corresponding to the first direction; and if the channel is idle within the first listening duration, accessing, by the UE, the channel.

## Description

This application claims priority to Chinese Patent Application No. 201810382181.7, filed with the Chinese Patent Office on April 25, 2018 and entitled "CHANNEL ACCESS METHOD, USER EQUIPMENT, BASE STATION, AND RELATED DEVICE", which is incorporated herein by reference in its entirety.

### TECHNICAL FIELD

This application relates to the communications field, and in particular, to a channel access method, user equipment, a base station, and a related device.

### BACKGROUND

In a long term evolution (long term evolution, LTE) network, if user equipment (user equipment, UE) needs to send data, the user equipment first sends an uplink scheduling request (scheduling request, SR) to a base station, and the base station allocates an uplink resource to the UE. The UE can start to transmit uplink data only after receiving an uplink scheduling grant.

To improve uplink transmission efficiency, in a new radio unlicensed high frequency spectrum system, the UE no longer sends uplink data based on an SR, and the base station allocates a dedicated channel for uplink transmission. When the channel is idle, UEs preempt the channel, to be specific, the UEs generate a random backoff value in a contention window. UE that has first completed a backoff preempts the channel and sends uplink data.

However, because propagation of a signal in a form of an electromagnetic wave is directional, according to a current manner in which a terminal UE preempts a channel, a direction of a beam sent by the UE that preempts the channel at a moment may not match a direction of the beam received by the base station at the current moment. As a result, channel transmission quality is poor.

### SUMMARY

Embodiments of this application provide a channel access method, user equipment, a base station, and a related device, to improve channel transmission quality.

In view of this, a first aspect of the embodiments of this application provides a channel access method, including:
receiving, by user equipment UE, first information sent by a base station, where the first information is used to indicate directions of data received by the base station in different time periods; and maintaining, by the UE, a first list, where the first list includes a sequence of the directions in which the base station receives the data, the sequence is used to indicate channel quality when the base station receives, in the different directions, the data sent by the UE, and a first direction is a direction ranked first when the base station receives, in a first time period, the data sent by the UE;
receiving, by the UE, second information sent by the base station, where the second information is used to indicate listening durations required by the UE to listen on a channel in the different directions in the first list, and a listening duration corresponding to a direction ranked higher is shorter;
when the first time period starts, determining, by the UE based on the second information, a first listening duration corresponding to the first direction; and
if the channel is idle within the first listening duration, accessing, by the UE, the channel.

According to the foregoing method, UE in a coverage area of each base station maintains a list, where different directions in the list are corresponding to different listening durations. The UE may transmit beams in a plurality of directions, a direction ranked first in the list is a direction with highest channel quality when the base station receives a transmit beam of the UE, and a listening duration corresponding to a direction ranked higher is shorter. For a direction of a beam received by the base station in a specific time period, UE with a shortest listening duration preferentially accesses a channel. Compared with another UE that occupies the channel in a current time period to send data to the base station, the UE has higher channel quality, and therefore channel transmission quality is improved.

Optionally, the receiving, by UE, first information sent by a base station includes: receiving, by the UE, a wide beam sent by the base station, where the wide beam includes the first information; or
receiving, by the UE, a narrow beam sent by the base station, where the narrow beam includes the first information.

According to the foregoing method, this solution provides a plurality of specific implementations in which the UE receives the first information sent by the base station, thereby improving flexibility of this solution.

Optionally, the receiving, by UE, second information sent by a base station includes: receiving, by the UE, a wide beam sent by the base station, where the wide beam includes the second information; or
receiving, by the UE, a narrow beam sent by the base station, where the narrow beam includes the second information.

According to the foregoing method, this solution provides a plurality of specific implementations in which the UE receives the second information sent by the base station, thereby improving flexibility of this solution.

Optionally, after the accessing, by the first UE, the channel, the method further includes: sending, by the UE, the data to the base station.

Optionally, the first message further includes a time-frequency resource location and/or a modulation and coding scheme.

According to the foregoing method, the first message in this solution may further include another parameter. This improves scalability of this solution.

A second aspect of the embodiments of this application provides a channel access method, including:
sending, by a base station, first information to first user equipment UE, where the first information is used to indicate directions of data received by the base station in different time periods; and maintaining, by the first UE, a first list, where the first list includes a sequence of directions in which the base station receives the data, the sequence is used to indicate channel quality when the base station receives, in different directions, the data sent by the first UE, and a first direction is a direction ranked first when the base station receives, in a first time period, the data sent by the first UE; and
sending, by the base station, a second message to the first UE, so that when the first time period starts, determining, by the first UE, based on the second information, a first listening duration corresponding to the first direction, and accessing the channel when determining, within the first listening duration, that the channel is idle. The second information is used to indicate listening durations required by the UE to listen on the channel in different directions in the first list, where the listening duration corresponding to a direction ranked higher is shorter is shorter.

Optionally, the sending, by a base station, first information to first user equipment UE includes: sending, by the base station, a wide beam to the first UE, where the wide beam includes the first information; or
sending, by the base station, a narrow beam to the first UE, where the narrow beam includes the first information.

Optionally, the sending, by the base station, second information to the first user equipment UE includes: sending, by the base station, a wide beam to the first UE, where the wide beam includes the second information; or
sending, by the base station, a narrow beam to the first UE, where the narrow beam includes the second information.

Optionally, the method further includes: sending, by the base station, the first information to second UE, and maintaining, by the second UE, a second list, where the second list includes the sequence of the directions in which the base station receives the data, the sequence is used to indicate channel quality when the base station receives, in the different directions, the data sent by the second UE, and a second direction is a direction ranked second when the base station receives, in the first time period, the data sent by the second UE; and
sending, by the base station, the second message to the second UE, so that when the first time period starts, the second UE determines, based on the second information, a second listening duration corresponding to the second direction, and accesses the channel when determining, within the second listening duration, that the channel is idle, where the second information is used to indicate listening durations required by the UE to listen on the channel in the different directions in the second list, and a listening duration corresponding to a direction ranked higher is shorter, and the second listening duration is greater than the first listening duration.

Optionally, the base station is allowed to receive the data in a plurality of directions in a same time period, and the method further includes:
sending, by the base station, the first information to second UE, and maintaining, by the second UE, a second list, where the second list includes the sequence of the directions in which the base station receives the data, the sequence is used to indicate channel quality when the base station receives, in the different directions, the data sent by the second UE, and a second direction is a direction ranked first when the base station receives, in the first time period, the data sent by the second UE; and
sending, by the base station, the second message to the second UE, so that when the first time period starts, the second UE determines, based on the second information, a second listening duration corresponding to the second direction, and accesses the channel when determining, within the second listening duration, that the channel is idle, where the second information is used to indicate listening durations required by the UE to listen on the channel in the different directions in the second list, and a listening duration corresponding to a direction ranked higher is shorter, and the second listening duration is greater than the first listening duration.

Optionally, the first message further includes a time-frequency resource location and/or a modulation and coding scheme.

A third aspect of the embodiments of this application provides UE, including:
a first receiving unit, configured to receive first information sent by a base station, where the first information is used to indicate directions of data received by the base station in different time periods, and the UE maintains a first list, where the first list includes a sequence of the directions in which the base station receives the data, the sequence is used to indicate channel quality when the base station receives, in the different directions, the data sent by the UE, and a first direction is a direction ranked first when the base station receives, in a first time period, the data sent by the UE;
a second receiving unit, configured to receive second information sent by the base station, where the second information is used to indicate listening durations required by the UE to listen on a channel in the different directions in the first list, and a listening duration corresponding to a direction ranked higher is shorter;
a determining unit, configured to determine, when the first time period starts, based on the second information, a first listening duration corresponding to the first direction; and
an access unit, configured to access the channel if the channel is idle within the first listening duration.

Optionally, the first receiving unit is specifically configured to receive a wide beam sent by the base station, where the wide beam includes the first information; or
the first receiving unit is specifically configured to receive a narrow beam sent by the base station, where the narrow beam includes the first information.

Optionally, the second receiving unit is specifically configured to receive a wide beam sent by the base station, where the wide beam includes the second information; or
the second receiving unit is specifically configured to receive a narrow beam sent by the base station, where the narrow beam includes the second information.

Optionally, the UE further includes: a sending unit, configured to send the data to the base station.

A fourth aspect of the embodiments of this application provides a base station, including:
a first sending unit, configured to send first information to first user equipment UE, where the first information is used to indicate directions of data received by the base station in different time periods, and the first UE maintains a first list, where the first list includes a sequence of the directions in which the base station receives the data, the sequence is used to indicate channel quality when the base station receives, in the different directions, the data sent by the first UE, and a first direction is a direction ranked first when the base station receives, in a first time period, the data sent by the first UE; and
a second sending unit, configured to send a second message to the first UE, so that when the first time period starts, the first UE determines, based on the second information, a first listening duration corresponding to the first direction, and accesses the channel when determining, within the first listening duration, that the channel is idle, where the second information is used to indicate listening durations required by the UE to listen on a channel in the different directions in the first list, and a listening duration corresponding to a direction ranked higher is shorter.

Optionally, the first sending unit is specifically configured to send a wide beam to the first UE, where the wide beam includes the first information; or
the first sending unit is specifically configured to send a narrow beam to the first UE, where the narrow beam includes the first information.

Optionally, the second sending unit is specifically configured to send a wide beam to the first UE, where the wide beam includes the second information; or
the second sending unit is specifically configured to send a narrow beam to the first UE, where the narrow beam includes the second information.

Optionally, the first sending unit is further configured to send the first information to second UE, and the second UE maintains a second list, where the second list includes the sequence of the directions in which the base station receives the data, the sequence is used to indicate channel quality when the base station receives, in the different directions, the data sent by the second UE, and a second direction is a direction ranked second when the base station receives, in the first time period, the data sent by the second UE; and
the second sending unit is further configured to send the second message to the second UE, so that when the first time period starts, the second UE determines, based on the second information, a second listening duration corresponding to the second direction, and accesses the channel when determining, within the second listening duration, that the channel is idle, where the second information is used to indicate listening durations required by the UE to listen on the channel in the different directions in the second list, and a listening duration corresponding to a direction ranked higher is shorter, and the second listening duration is greater than the first listening duration.

Optionally, the base station is allowed to receive the data in a plurality of directions in a same time period, and the first sending unit is further configured to send the first information to second UE, and the second UE maintains a second list, where the second list includes a sequence of the directions in which the base station receives the data, the sequence is used to indicate channel quality when the base station receives, in the different directions, the data sent by the second UE, and a second direction is a direction ranked first when the base station receives, in the first time period, the data sent by the second UE; and
the second sending unit is further configured to send the second message to the second UE, so that when the first time period starts, the second UE determines, based on the second information, a second listening duration corresponding to the second direction, and accesses the channel when determining, within the second listening duration, that the channel is idle, where the second information is used to indicate listening durations required by the UE to listen on the channel in the different directions in the second list, and a listening duration corresponding to a direction ranked higher is shorter, and the second listening duration is equal to the first listening duration.

A fifth aspect of the embodiments of this application provides UE, and the UE has a function of implementing behavior of the UE in the foregoing method. A structure of the UE includes a processor and a memory, where the memory is configured to store program code that supports a terminal to perform the foregoing method, and the processor is configured to execute a program stored in the memory. The UE may further includes a bus and an input/output interface.

A sixth aspect of the embodiments of this application provides a base station, and the base station has a function of implementing behavior of the base station in the foregoing method. A structure of the base station includes a processor and a memory, where the memory is configured to store program code that supports a terminal to perform the foregoing method, and the processor is configured to execute a program stored in the memory. The base station may further includes a bus and an input/output interface.

A seventh aspect of the embodiments of this application provides a computer-readable storage medium, including an instruction. When the instruction is run on a computer, the computer is enabled to perform a procedure of the channel access method according to the first aspect or the second aspect of the embodiments of this application.

An eighth aspect of the embodiments of this application provides a computer program product. When the computer program product runs on a computer, the computer is enabled to perform a procedure of the channel access method according to the first aspect or the second aspect of the embodiments of this application.

According to the foregoing technical solutions, it can be learned that the embodiments of this application have the following advantages:

In this embodiment of this application, UE obtains first information and second information from a base station, where the first information is used to indicate directions of data received by the base station in different time periods; the UE maintains a first list, where the first list includes a sequence of directions in which the base station receives the data, the sequence is used to indicate channel quality when the base station receives, in different directions, the data sent by the first UE, and a first direction is a direction ranked first when the base station receives, in a first time period, the data sent by the first UE, where the second information is used to indicate a listening durations required by the UE to listen on the channel in different directions in the first list, and a listening duration corresponding to a direction ranked higher is shorter; when the first time period starts, the UE determines, based on the second information, a first listening duration corresponding to the first direction, and if the channel is idle within the first listening duration, the UE accesses the channel. In the foregoing manner, UE in a coverage area of each base station maintains a list, where different directions in the list are corresponding to different listening durations. The UE may transmit beams in a plurality of directions, a direction ranked first in the list is a direction with highest channel quality when the base station receives a transmit beam of the UE, and a listening duration corresponding to a direction ranked higher is shorter. For a direction of a beam received by the base station in a specific time period, UE with a shortest listening duration preferentially accesses a channel. Compared with another UE that occupies the channel in a current time period to send data to the base station, the UE has higher channel quality, and therefore channel transmission quality is improved.

### BRIEF DESCRIPTION OF DRAWINGS

FIG. 1 is a system architectural diagram of a network environment according to this application;
FIG. 2 is a schematic diagram of an embodiment of a channel access method according to this application;
FIG. 3 is a schematic diagram of an embodiment of UE according to this application; and
FIG. 4 is a schematic diagram of an embodiment of a base station according to this application;
FIG. 5 is a schematic structural diagram of UE according to this application.
FIG. 6 is a schematic structural diagram of a base station according to this application;

### DESCRIPTION OF EMBODIMENTS

Embodiments of this application provide a channel access method, user equipment, a base station, and a related device, to improve channel transmission quality.

In the specification, claims, and accompanying drawings of this application, the terms "first", "second", "third", "fourth", and the like (if existent) are intended to distinguish between similar objects but do not necessarily indicate a specific order or sequence. It should be understood that data termed in such a way are interchangeable in proper circumstances so that the embodiments described herein can be implemented in other orders than the order illustrated or described herein. Moreover, the terms "include", "have" and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

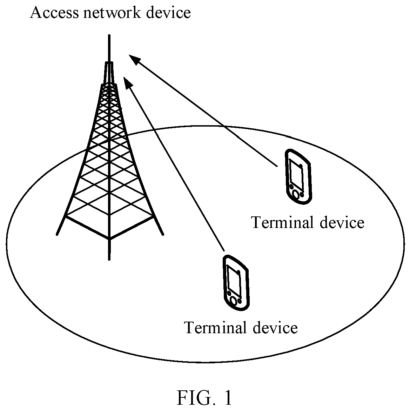

A system architecture or a scenario mainly applied to this application is shown in FIG. 1, including an access network device and a terminal device. Both the access network device and the terminal device may work on a licensed frequency band or an unlicensed frequency band. In the present invention, regardless of the licensed frequency band or the unlicensed frequency band, one or more carriers may be included. A carrier aggregation is performed on the licensed frequency band and the unlicensed frequency band. This may include the carrier aggregation performed on one or more carriers included in the licensed frequency band and one or more carriers included in the unlicensed frequency band.

The access network device may be an evolved NodeB (evolutional NodeB, eNB or e-NodeB for short) in a long term evolution (long term evolution, LTE) system or a licensed-assisted access using long term evolution (authorized auxiliary access long-term evolution, LAA-LTE) system, a macro base station, or a micro base station (also referred to as a "small cell"), a picocell base station, an access point (access point, AP), a transmission point (transmission point, TP), or a base station in a new radio (new radio, NR) system, for example, a new generation NodeB (new generation NodeB, gNodeB).

A terminal device may be referred to as user equipment (user equipment, UE), a mobile station (mobile station, MS), a mobile terminal (mobile terminal), a smart terminal, or the like. The terminal device may communicate with one or more core networks through a radio access network (radio access network, RAN). For example, the terminal device may be a mobile phone (or referred to as a "cellular" phone), or a computer with a mobile terminal. The terminal device may be alternatively a portable, pocket-size, handheld, computer built-in, or in-vehicle mobile apparatus, and a terminal device in a future NR network, which exchanges voice or data with the radio access network. Description of the terminal device: in this application, a device that may perform data communication with a base station may be considered as a terminal device. In this application, the terminal device is UE in a general sense.

In an unlicensed spectrum-based uplink scheduling system, when UE needs to send data, the UE first sends an SR to a base station, to notify the base station that there is uplink data that needs to be transmitted, and sends a buffer status report (Buffer Status Report, BSR) to the base station, to notify the base station of a size of the data that needs to be transmitted. Then, after receiving an uplink grant delivered by the base station, the UE may send the uplink data according to an instruction of the base station.

In the foregoing process, the UE needs to contend for a channel in a listen before talk (listen before talk, LBT) manner. To be specific, the UE that needs to send data first listens on the channel, generates a random backoff value in a contention window. When the random backoff value reaches zero, which indicates the channel is in an idle state, the UE may access the channel and send the data.

In addition, the UE may alternatively preempt a channel in a grant-free uplink (grant-free uplink, GUL) manner, that is, the UE no longer requests to send data based on an SR. The UE may contend for a channel on a specified time-frequency resource, and UEs independently generate a random backoff value in a contention window. The UE that has completed the fallback first preempts a channel and sends the data.

In a new radio unlicensed high frequency spectrum system, the base station needs to transmit a narrow beam to expand a coverage area, that is, a beam transmitted by the base station is directional. Specifically, the base station may form a narrow beam coverage system through digital beam forming (digital beam forming, DBF) or DBF combined with analog beam forming (analog beam forming, DBF).

The base station may receive data in different directions in different time periods. In a same time period, the UE may determine an optimal beam of the UE for transmission. For the base station, when the base station receives, in a direction, the data sent by UEs, channel quality is different when the base station receives optimal beams transmitted by different UEs. It may be understood that a higher degree of matching between a current direction of a beam received by the base station and an optimal receive beam direction in the list maintained by the UE indicates higher channel quality. To improve channel quality, it needs to be ensured that UE with a highest degree of matching with the current direction of the beam received by the base station can preferentially access a channel.

Therefore, an embodiment of this application provides a channel access method to resolve the foregoing problem. For ease of understanding, the following describes a specific procedure in this embodiment of this application.

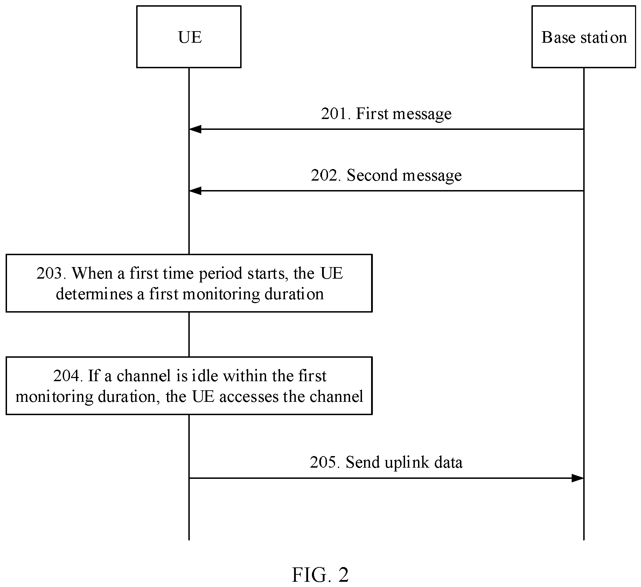

Refer to FIG. 2, an embodiment of the channel access method in the embodiments of this application includes the following steps.

201: Abase station sends a first message to UE.

In this embodiment of this application, the base station sends the first message to the UE in a coverage area of the base station, where the first message is used to indicate directions in which the base station receives data in different time periods. For example, there are four different directions in which the base station receives data on a single channel. The base station receives a beam in a direction 0 in a time period T0, the base station receives a beam in a direction 1 in a time period T1, the base station receives a beam in a direction 2 in a time period T2, and the base station receives a beam in a direction 3 in a time period T3. It may be understood that TO to T3 are four different time periods, and there are four different directions, the direction 0 to the direction 3, for the base station to receive beams in different time periods.

It should be noted that the base station may send the first message to the UE by transmitting a wide beam. In addition, the base station may alternatively send the first message to the UE by transmitting a narrow beam. It may be understood that a coverage area of the wide beam is large, more UEs may receive, at a time, the first message delivered by the base station. However, directivity of the wide beam is relatively poor. Therefore, quality of a signal received by the UE is relatively poor, and a coverage area of the narrow beam is small. Therefore, the base station needs to alternately send narrow beams in a plurality of directions, so that all UEs can receive the first message. The narrow beam is highly directional. As a result, the quality of a signal received by the UE is relatively high. A specific manner of delivering the first message by the base station is not limited in this solution.

It should be noted that, each UE in the coverage area of the base station maintains a list, where the first list includes a sequence of directions in which the base station receives the data, the sequence is used to indicate channel quality when the base station receives, in different directions, the data sent by UE. It may be understood that the UE may determine the optimal beam of the UE for transmission, and the base station is corresponding to different receive beam directions in different time periods. Therefore, in different time periods, a degree of matching between a direction of the optimal receive beam in a list maintained by the UE and a current direction of the beam received by the base station is different, that is, the channel quality is different. The direction, in which the base station receives the beam, with a higher degree of matching with the direction of the optimal receive beam in the list maintained by the UE is ranked higher. The following provides specific descriptions with reference to Table 1.

**Table 1**

| UE0 | UE1 | UE2 | UE3 |
|---|---|---|---|
| Direction 0 | Direction 1 | Direction 2 | Direction 3 |
| Direction 1 | Direction 0 | Direction 1 | Direction 2 |
| Direction 2 | Direction 2 | Direction 3 | Direction 1 |
| Direction 3 | Direction 3 | Direction 0 | Direction 0 |

As shown in Table 1, there are four different UEs, UE0 to UE3, in the coverage area of the base station, and the base station respectively receives beams in four different directions from the direction 0 to the direction 3 in four different time periods from TO to T3. The UE0 is used as an example. A descending order in a list maintained by the UE0 is: the direction 0, the direction 1, the direction 2, and the direction 3. In other words, when the base station receives uplink data in the direction 0, quality of a channel accessed by the UE0 and used for data transmission is the highest, followed by the direction 1; when the base station receives uplink data in the direction 1, quality of the channel accessed by the UE0 and used for data transmission is poorer, and then the direction 2 and the direction 3. The same principle applies to UE1, UE2, and the UE3. Therefore, it may be understood that, when the base station receives the uplink data in the TO time period, that is, in the direction 0, it needs to be ensured that the UE0 can preferentially access the channel, to improve channel transmission quality. When the uplink data is received in the time period T1, that is, in the direction 1, it needs to be ensured that the UE1 can preferentially access the channel, to improve channel transmission quality. The same principle applies to other time periods, and details are not described herein again.

It should be noted that the list maintained by each UE is generated after beam training. Specifically, a direction of a beam received by the base station is first fixed, and a beam with highest channel quality is selected from beams transmitted by the UE in all directions of the beams transmitted by the UE as an optimal transmit beam direction of the UE. Then, the optimal transmit beam direction of the UE is fixed. In all directions of beams received by the base station, higher measured channel quality indicates a higher priority of a direction of a beam received by the base station. By analogy, the base station may provide a corresponding list for each UE in the coverage area.

It should be noted that the first message may further include parameters such as a time-frequency resource location and a modulation and coding scheme.

202: The base station sends a second message to the UE.

In this embodiment of this application, the base station sends the second message to the UE in the coverage area of the base station. The second message is used to indicate, in the list maintained by each UE, listening durations required by the UE to listen on a channel in different receive beam directions of the base station. Specifically, the base station may broadcast a listening parameter of the UE in the list in the beam receive direction of each base station, where the listening parameter may include a contention window parameter and a listening delay time parameter, the listening delay parameter may indicate a start time of a contention window, and the contention window parameter is used to indicate a duration of random backoff in the contention window. Therefore, the UE may learn of a listening start time and the specific listening duration based on the two parameters. It may be understood that, in the list, a direction of the beam received by the base station, which is ranked higher, is corresponding to a smaller contention window and a listening delay time ranked higher. The UE0 is used as an example, and the direction 0 is an optimal direction in the list maintained by the UE0. When the base station receives the uplink data in the direction 0 in the time period T0, a listening duration set for the UE0 is T-Opt, and the direction 1 is a second optimal direction in the list maintained by the UE0. When the base station receives the uplink data in the direction 1 in the time period T1, a listening duration set for the UE0 may be T-Opt+a. When the base station receives the uplink data in the direction 2 in the time period T2, a listening duration set for the UE0 is T-Opt+a+b. When the base station receives uplink data in the direction 3 in the time period T3, a listening duration set for the UE0 is T-Opt+a+b+c. a, b and c are time differences of different listening durations, and a minimum time difference is a symbol length in an orthogonal frequency division multiplexing (Orthogonal Frequency Division Multiplexing, OFDM) technology.

It may be understood that a same sequence location in the list maintained by each UE corresponds to a same listening parameter. Optionally, values of a, b, and c may be equal or unequal. This is not specifically limited herein.

It may be understood that, when listening on the channel, the UE generates a random backoff value in the contention window. When the random backoff value reaches zero, it indicates that the channel is in an idle state. In this case, a shorter duration of the contention window indicates a shorter duration for listening on the channel by the UE, and the UE is more likely to preempt the channel. In addition, a shorter listening delay time indicates that the UE is more likely to preempt the channel.

In addition, if UE with a highest priority does not send data in a current time period (that is, when the UE does not participate in channel preemption), UE with a next priority may preempt a channel and send uplink data. This avoids a waste of channel resources. For example, in the time period T0, if the UE0 with a highest priority has no uplink data to send, the UE1 with a second highest priority can preempt the channel and send the data.

It may be understood that the base station may also deliver the second message to the UE by using a wide beam or a narrow beam. A specific manner of delivering the second message by the base station is not limited in this solution.

It should be noted that step 201 and step 202 are not subject to a fixed sequence. In other words, the base station may first broadcast the first message or the second message, or may simultaneously broadcast the first message and the second message. This is not specifically limited herein.

203: When the first time period starts, the UE determines a first listening duration.

In this embodiment of this application, for the UE, a first direction is a direction ranked first in the list maintained by the UE, that is, a direction of a beam received by the base station in the first time period. The UE may determine, based on the second message delivered by the base station, a first listening duration corresponding to the first direction. The UE0 is also used as an example. If the first time period is the TO time period and the first direction is the direction 0, the first listening duration is T-Opt.

204: If the channel is idle within the first listening duration, the UE accesses the channel.

In this embodiment of this application, the UE starts to listen on the channel. If the channel is always in an idle state within the first listening duration, the UE may access the channel.

It should be noted that the base station may also support a multi-path scenario, to be specific, in a same time period, the base station may support a plurality of UEs to concurrently send data on a plurality of paths of a same channel. For example, in the time period T0, the base station may receive beams in two different directions: the direction 0 and a direction 4. In the time period T1, the base station may receive beams in two different directions: the direction 1 and a direction 5. In the time period T2, the base station may receive beams in two different directions: the direction 2 and a direction 6. In the time period T3, the base station may receive beams in two different directions: the direction 3 and a direction 7. Therefore, in each time period, the UE may independently contend for a channel on a plurality of different paths. A specific contention manner is similar to the description about the channel preemption performed by the UE in the foregoing embodiment, and details are not described herein again. It may be understood that in the multi-path scenario, a specific quantity of paths is subject to an actual application, and is not limited herein.

In addition, for example, in the time period T0, another UE maintains a list that is the same as that of the UE0, that is, an optimal direction is the direction 0. In this case, different UEs that maintain the same list may freely contend for a channel. A specific manner is not limited herein.

205: The UE sends uplink data to the base station.

In this embodiment of this application, after preempting the channel, the UE may start to send the uplink data to the base station.

In this embodiment of this application, the UE obtains first information and second information from the base station, where the first information is used to indicate directions of data received by the base station in different time periods. The UE maintains a first list, where the first list includes a sequence of directions in which the base station receives the data, the sequence is used to indicate channel quality when the base station receives, in different directions, the data sent by the UE, and a first direction is a direction ranked first when the base station receives, in the first time period, the data sent by the UE. The second information is used to indicate listening durations required by the UE to listen on a channel in different directions in the first list, and a listening duration corresponding to a direction ranked higher is shorter. When the first time period starts, the UE determines, based on the second information, a first listening duration corresponding to the first direction. If the channel is idle within the first listening duration, the UE accesses the channel. In the foregoing manner, each UE in a coverage area of each base station maintains a list, where different directions in the list are corresponding to different listening durations. The UE may transmit beams in a plurality of directions, a direction ranked first in the list is a direction with highest channel quality when the base station receives a transmit beam of the UE, and a listening duration corresponding to a direction ranked higher is shorter. For a direction of a beam received by the base station in a specific time period, UE with a shortest listening duration preferentially accesses a channel. Compared with another UE that occupies the channel in a current time period to send data to the base station, the UE has higher channel quality, and therefore channel transmission quality is improved.

The foregoing describes the channel access method in the embodiments of this application. The following describes the UE in the embodiments of this application.

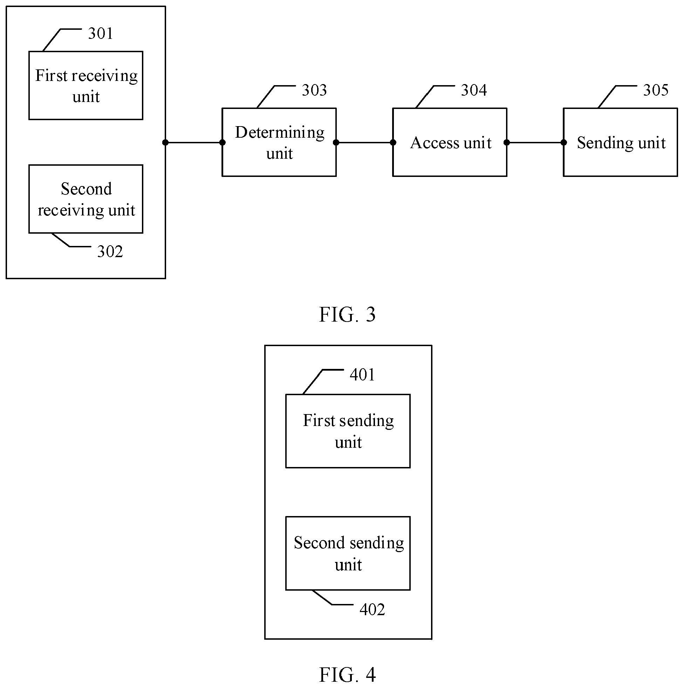

Refer to FIG. 3, an embodiment of the UE in the embodiments of this application includes:
a first receiving unit 301, configured to receive first information sent by a base station, where the first information is used to indicate directions of data received by the base station in different time periods, and the UE maintains a first list, where the first list includes a sequence of the directions in which the base station receives the data, the sequence is used to indicate channel quality when the base station receives, in the different directions, the data sent by the UE, and a first direction is a direction ranked first when the base station receives, in a first time period, the data sent by the UE;
a second receiving unit 302, configured to receive second information sent by the base station, where the second information is used to indicate listening durations required by the UE to listen on a channel in the different directions in the first list, and a listening duration corresponding to a direction ranked higher is shorter;
a determining unit 303, configured to determine, when the first time period starts, based on the second information, a first listening duration corresponding to the first direction; and
an access unit 304, configured to access the channel if the channel is idle within the first listening duration.

Optionally, the first receiving unit 301 is specifically configured to receive a wide beam sent by the base station, where the wide beam includes the first information; or
the first receiving unit is specifically configured to receive a narrow beam sent by the base station, where the narrow beam includes the first information.

Optionally, the second receiving unit 302 is specifically configured to receive a wide beam sent by the base station, where the wide beam includes the second information; or
the second receiving unit is specifically configured to receive a narrow beam sent by the base station, where the narrow beam includes the second information.

Optionally, the UE may further include:
a sending unit 305, configured to send data to the base station.

In this embodiment of this application, the first receiving unit 301 receives the first information from the base station, and the second receiving unit 302 receives the second information from the base station, where the first information is used to indicate the directions of the data received by the base station in the different time periods. The UE maintains the first list, where the first list includes the sequence of the directions in which the base station receives the data, the sequence is used to indicate the channel quality when the base station receives, in the different directions, the data sent by the UE, and the first direction is the direction ranked first when the base station receives, in the first time period, the data sent by the UE. The second information is used to indicate the listening durations required by the UE to listen on the channel in the different directions in the first list, where the listening duration corresponding to the direction ranked higher is shorter. When the first time period starts, the determining unit 303 determines, based on the second information, the first listening duration corresponding to the first direction, and if the channel is idle within the first listening duration, the access unit 304 accesses the channel. In the foregoing manner, UE in a coverage area of each base station maintains a list, where different directions in the list are corresponding to different listening durations. The UE may transmit beams in a plurality of directions, a direction ranked first in the list is a direction with highest channel quality when the base station receives a transmit beam of the UE, and a listening duration corresponding to a direction ranked higher is shorter. For a direction of a beam received by the base station in a specific time period, UE with a shortest listening duration preferentially accesses a channel. Compared with another UE that occupies the channel in a current time period to send data to the base station, the UE has higher channel quality, and therefore channel transmission quality is improved.

The foregoing describes the UE in the embodiments of this application, and the following describes the base station in the embodiments of this application.

Refer to FIG. 4, an embodiment of a base station according to an embodiment of this application includes:
a first sending unit 401, configured to send first information to first user equipment UE, where the first information is used to indicate directions of data received by the base station in different time periods, and the first UE maintains a first list, where the first list includes a sequence of the directions in which the base station receives the data, the sequence is used to indicate channel quality when the base station receives, in the different directions, the data sent by the first UE, and a first direction is a direction ranked first when the base station receives, in a first time period, the data sent by the first UE; and
a second sending unit 402, configured to send a second message to the first UE, so that when the first time period starts, the first UE determines, based on the second information, a first listening duration corresponding to the first direction, and accesses the channel when determining, within the first listening duration, that the channel is idle, where the second information is used to indicate listening durations required by the UE to listen on a channel in the different directions in the first list, and a listening duration corresponding to a direction ranked higher is shorter.

Optionally, the first sending unit 401 is specifically configured to send a wide beam to the first UE, where the wide beam includes the first information; or
the first sending unit is specifically configured to send a narrow beam to the first UE, where the narrow beam includes the first information.

Optionally, the second sending unit 402 is specifically configured to send a wide beam to the first UE, where the wide beam includes the second information; or
the second sending unit is specifically configured to send a narrow beam to the first UE, where the narrow beam includes the second information.

Optionally, the first sending unit 401 is further configured to send the first information to second UE, and the second UE maintains a second list, where the second list includes the sequence of the directions in which the base station receives the data, the sequence is used to indicate channel quality when the base station receives, in the different directions, the data sent by the second UE, and a second direction is a direction ranked second when the base station receives, in the first time period, the data sent by the second UE; and
the second sending unit 402 is further configured to send the second message to the second UE, so that when the first time period starts, the second UE determines, based on the second information, a second listening duration corresponding to the second direction, and accesses the channel when determining, within the second listening duration, that the channel is idle, where the second information is used to indicate listening durations required by the UE to listen on the channel in the different directions in the second list, and a listening duration corresponding to a direction ranked higher is shorter, and the second listening duration is greater than the first listening duration.

Optionally, the base station is allowed to receive the data in a plurality of directions in a same time period, and the first sending unit 401 is further configured to send the first information to second UE, and the second UE maintains a second list, where the second list includes a sequence of the directions in which the base station receives the data, the sequence is used to indicate channel quality when the base station receives, in the different directions, the data sent by the second UE, and a second direction is a direction ranked first when the base station receives, in the first time period, the data sent by the second UE; and
the second sending unit 402 is further configured to send the second message to the second UE, so that when the first time period starts, the second UE determines, based on the second information, a second listening duration corresponding to the second direction, and accesses the channel when determining, within the second listening duration, that the channel is idle, where the second information is used to indicate listening durations required by the UE to listen on the channel in the different directions in the second list, and a listening duration corresponding to a direction ranked higher is shorter, and the second listening duration is equal to the first listening duration.

The foregoing describes the UE in the embodiments of this application from a perspective of a modular functional entity. The following describes the UE in the embodiments of this application from a perspective of hardware processing.

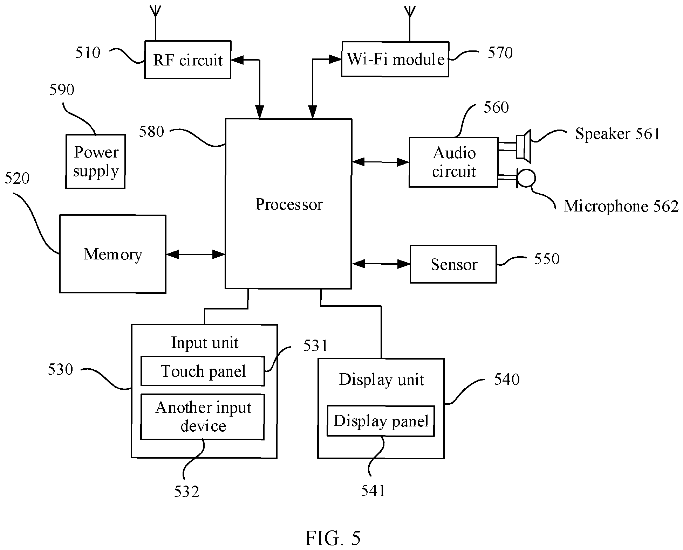

As shown in FIG. 5, an embodiment of this application further provides UE. For ease of description, only a part related to this embodiment of this application is described. For specific technical details that are not disclosed, refer to the method part in the embodiments of this application. The UE may be any terminal device including a mobile phone, a tablet computer, a personal digital assistant (personal digital assistant, PDA), a point of sales (point of sales, POS), a vehicle-mounted computer, or the like. For example, the UE is a mobile phone.

FIG. 5 is a block diagram of a partial structure of a mobile phone related to UE according to an embodiment of this application. Refer to FIG. 5. The mobile phone includes components such as a radio frequency (Radio Frequency, RF for short) circuit 510, a memory 520, an input unit 530, a display unit 540, a sensor 550, an audio frequency circuit 560, a wireless fidelity (wireless fidelity, Wi-Fi) module 570, a processor 580, and a power source 590. A person skilled in the art may understand that a structure of the mobile phone shown in FIG. 5 does not constitute a limitation on the mobile phone, and the mobile phone may include more or fewer components than those shown in the figure, combine some components, or have different component arrangements.

Each component of the mobile phone is specifically described below with reference to FIG. 5.

The RF circuit 510 may be configured to receive and send a signal in an information receiving and sending process or a call process. In particular, after receiving downlink information from a base station, the RF circuit 510 sends the downlink information to the processor 580 for processing, and sends the designed uplink data to the base station. Generally, the RF circuit 510 includes but is not limited to an antenna, at least one amplifier, a transceiver, a coupler, a low noise amplifier (low noise amplifier, LNA), a duplexer, and the like. In addition, the RF circuit 510 may further communicate with a network and another device through wireless communication. Any communications standard or protocol may be used for the wireless communication, and includes but is not limited to a global system for mobile communications (global system of mobile communication, GSM), a general packet radio service (general packet radio service, GPRS) system, a code division multiple access (code division multiple access, CDMA) system, a wideband code division multiple access (wideband code division multiple access, WCDMA) system, a long term evolution (long term evolution, LTE) system, an email, a short message service (short messaging service, SMS), and the like.

The memory 520 may be configured to store a software program and a module. The processor 580 executes various functional applications of the mobile phone and data processing by running the software program and the module stored in the memory 520. The memory 520 may mainly include a program storage area and a data storage area. The program storage area may store an operating system, an application program required by at least one function (such as a sound play function or an image play function), and the like. The data storage area may store data (such as audio data or an address book) created based on use of the mobile phone, and the like. In addition, the memory 520 may include a high-speed random access memory, and may further include a non-volatile memory, for example, at least one magnetic disk storage device, a flash memory device, or another volatile solid-state storage device.

The input unit 530 may be configured to: receive entered digit or character information, and generate key signal input related to user setting and function control of the mobile phone. Specifically, the input unit 530 may include a touch control panel 531 and another input device 532. The touch control panel 531, also referred to as a touchscreen, may collect a touch operation (for example, an operation performed by a user on the touch control panel 531 or near the touch panel 531 by using any proper object or accessory such as a finger or a tablet pen) performed by the user on or near the touch control panel, and drive a corresponding connection apparatus based on a preset program. Optionally, the touch control panel 531 may include two parts: a touch detection apparatus and a touch controller. The touch detection apparatus detects a touch position of a user, detects a signal brought by the touch operation, and transmits the signal to the touch controller. The touch controller receives touch information from the touch detection apparatus, and converts the touch information into coordinates of a touch point. Then the touch controller sends the coordinates of the touch point to the processor 580, and can receive and execute a command sent by the processor 580. In addition, the touch control panel 531 may be implemented in a plurality of types, such as a resistive type, a capacitive type, an infrared type, and a surface acoustic wave type. In addition to the touch control panel 531, the input unit 530 may further include the another input device 532. Specifically, the another input device 532 may include but is not limited to one or more of a physical keyboard, a function key (for example, a volume control press key or a power on/off press key), a trackball, a mouse, a joystick, and the like.

The display unit 540 may be configured to display information entered by the user or information provided for the user, and various menus of the mobile phone. The display unit 540 may include a display panel 541. Optionally, the display panel 541 may be configured in a form of a liquid crystal display (liquid crystal display, LCD), an organic light-emitting diode (organic light-emitting diode, OLED), or the like. Further, the touch control panel 531 may cover the display panel 541. When detecting a touch operation on or near the touch control panel 531, the touch control panel 531 transmits the touch operation to the processor 580 to determine a type of a touch event. Then the processor 580 provides corresponding visual output on the display panel 541 based on the type of the touch event. In FIG. 5, the touch control panel 531 and the display panel 541 are used as two independent parts to implement input and input functions of the mobile phone. However, in some embodiments, the touch control panel 531 and the display panel 541 may be integrated to implement the input and output functions of the mobile phone.

The mobile phone may further include at least one type of sensor 550, such as a light sensor, a motion sensor, or another sensor. Specifically, the optical sensor may include an ambient light sensor and a proximity sensor. The ambient light sensor may adjust brightness of the display panel 541 according to brightness of ambient light, and the proximity sensor may close the display panel 541 and/or backlight when the mobile phone moves to an ear. As a type of movement sensor, an accelerometer sensor may detect a value of acceleration in each direction (usually on three axes), may detect a value and a direction of gravity in a stationary state, and may be used in an application for identifying a mobile phone posture (such as screen switching between a landscape mode and a portrait mode, a related game, or magnetometer posture calibration), a function related to vibration identification (such as a pedometer or a knock), or the like. Other sensors such as a gyroscope, a barometer, a hygrometer, a thermometer, or an infrared sensor may be further configured in the mobile phone. Details are not described herein.

The audio frequency circuit 560, a loudspeaker 561, and a microphone 562 may provide an audio interface between the user and the mobile phone. The audio frequency circuit 560 may receive audio data, convert the audio data into an electrical signal, and transmit the electrical signal to the loudspeaker 561, and the loudspeaker 561 converts the electrical signal into a sound signal for output. In addition, the microphone 562 converts a collected sound signal into an electrical signal. The audio frequency circuit 560 receives the electrical signal, converts the electrical signal into audio data, and then outputs the audio data to the processor 580 for processing. The processor 580 sends the audio data to, for example, another mobile phone by using the RF circuit 510, or outputs the audio data to the memory 520 for further processing.

Wi-Fi is a short-distance wireless transmission technology. With the Wi-Fi module 570, the mobile phone may help the user send and receive an email, browse a web page, access streaming media, and the like. The Wi-Fi module 570 provides wireless access to the broadband internet for the user. Although FIG. 5 shows the Wi-Fi module 570, it may be understood that the Wi-Fi module 570 is not a mandatory component of the mobile phone, and may be omitted based on a requirement without changing the essence of this application.

The processor 580 is a control center of the mobile phone, connects various parts of the entire mobile phone by using various interfaces and lines, and performs various functions of the mobile phone and data processing by running or executing the software program and/or the module stored in the memory 520 and by invoking data stored in the memory 520, to perform overall monitoring on the mobile phone. Optionally, the processor 580 may include one or more processing units. Preferably, an application processor and a modem processor may be integrated in the processor 580. The application processor mainly processes an operating system, a user interface, an application program, and the like. The modem processor mainly processes wireless communication. It may be understood that the modem processor may alternatively not be integrated into the processor 580.

The mobile phone further includes the power supply 590 (such as a battery) for supplying power to the components. Preferably, the power supply may be logically connected to the processor 580 by using a power management system, thereby implementing functions such as charging, discharging and power consumption management by using the power management system.

Although not shown, the mobile phone may further include a camera, a Bluetooth module, and the like. Details are not described herein.

In this embodiment of this application, the processor 580 is specifically configured to perform all or some of actions performed by the UE in the embodiments shown in FIG. 2. Details are not described herein again.

The foregoing describes the base station and the terminal in the embodiments of this application from a perspective of a modular functional entity. The following describes the base station and the terminal in the embodiments of this application from a perspective of hardware processing.

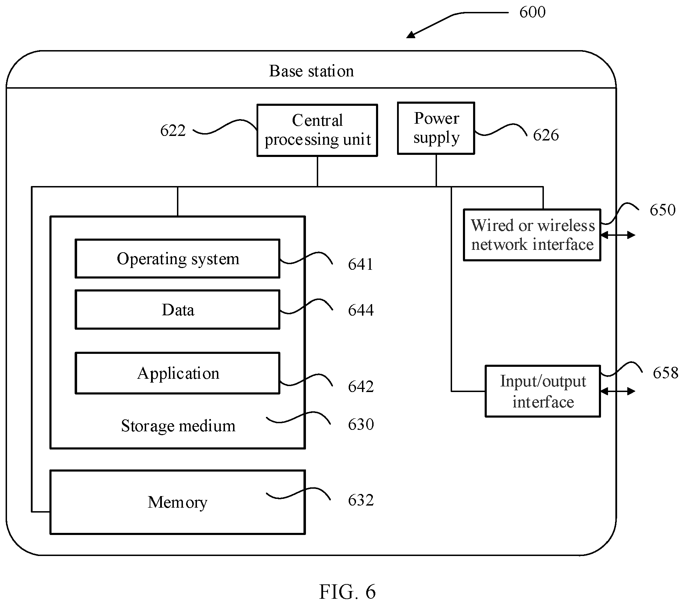

FIG. 6 is a schematic structural diagram of a base station according to an embodiment of the present invention. The base station 600 may have a relatively large difference due to different configurations or performance, and may include one or more central processing units (central processing units, CPU) 622 (for example, one or more processors), a memory 632, one or more storage media 630 (for example, one or more mass storage devices) that store an application program 642 or data 644. The memory 632 and the storage medium 630 may perform temporary storage or permanent storage. A program stored in the storage medium 630 may include one or more modules (not shown in the figure), and each module may include a series of instruction operations for the base station. Further, the central processing unit 622 may be configured to communicate with the storage medium 630, and perform, on the base station 600, the series of instruction operations in the storage medium 630.

The central processing unit 622 may perform, according to an instruction operation, all or some actions performed by the base station in the embodiment shown in FIG. 2. Details are not described herein again.

The base station 600 may further include one or more power supplies 626, one or more wired or wireless network interfaces 650, one or more input/output interfaces 658, and/or one or more operating systems 641 such as Windows ServerTM, Mac OS XTM, UnixTM, LinuxTM, and FreeBSDTM.

The steps performed by the base station in the foregoing embodiment may be based on a base station structure shown in FIG. 6.

It may be clearly understood by a person skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM, read-only memory), a random access memory (RAM, random access memory), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A channel access method, comprising:
receiving, by user equipment UE, first information sent by a base station, wherein the first information is used to indicate directions of data received by the base station in different time periods; and maintaining, by the UE, a first list, wherein the first list comprises a sequence of the directions in which the base station receives the data, the sequence is used to indicate channel quality when the base station receives, in the different directions, the data sent by the UE, and a first direction is a direction ranked first when the base station receives, in a first time period, the data sent by the UE;
receiving, by the UE, second information sent by the base station, wherein the second information is used to indicate listening durations required by the UE to listen on a channel in the different directions in the first list, and a listening duration corresponding to a direction ranked higher is shorter;
when the first time period starts, determining, by the UE based on the second information, a first listening duration corresponding to the first direction; and
if the channel is idle within the first listening duration, accessing, by the UE, the channel.

2. The method according to claim 1, wherein the receiving, by UE, first information sent by a base station comprises:
receiving, by the UE, a wide beam sent by the base station, wherein the wide beam comprises the first information;
or
receiving, by the UE, a narrow beam sent by the base station, wherein the narrow beam comprises the first information.

3. The method according to claim 1, wherein the receiving, by the UE, second information sent by the base station comprises:
receiving, by the UE, a wide beam sent by the base station, wherein the wide beam comprises the second information; or
receiving, by the UE, a narrow beam sent by the base station, wherein the narrow beam comprises the second information.

4. The method according to any one of claims 1 to 3, wherein after the accessing, by the first UE, the channel, the method further comprises:
sending, by the UE, the data to the base station.

5. The method according to any one of claims 1 to 3, wherein the first message further comprises a time-frequency resource location and/or a modulation and coding scheme.

6. A channel access method, comprising:
sending, by a base station, first information to first user equipment UE, wherein the first information is used to indicate directions of data received by the base station in different time periods; and maintaining, by the first UE, a first list, wherein the first list comprises a sequence of the directions in which the base station receives the data, the sequence is used to indicate channel quality when the base station receives, in the different directions, the data sent by the first UE, and a first direction is a direction ranked first when the base station receives, in a first time period, the data sent by the first UE; and
sending, by the base station, a second message to the first UE, so that when the first time period starts, the first UE determines, based on the second information, a first listening duration corresponding to the first direction, and accesses a channel when determining, within the first listening duration, that the channel is idle, wherein the second information is used to indicate listening durations required by the UE to listen on the channel in the different directions in the first list, and a listening duration corresponding to a direction ranked higher is shorter.

7. The method according to claim 6, wherein the sending, by a base station, first information to first user equipment UE comprises:
sending, by the base station, a wide beam to the first UE, wherein the wide beam comprises the first information;
or
sending, by the base station, a narrow beam to the first UE, wherein the narrow beam comprises the first information.

8. The method according to claim 6, wherein the sending, by the base station, second information to the first user equipment UE comprises:
sending, by the base station, a wide beam to the first UE, wherein the wide beam comprises the second information; or
sending, by the base station, a narrow beam to the first UE, wherein the narrow beam comprises the second information.

9. The method according to any one of claims 6 to 8, wherein the method further comprises:
sending, by the base station, the first information to second UE, and maintaining, by the second UE, a second list, wherein the second list comprises the sequence of the directions in which the base station receives the data, the sequence is used to indicate channel quality when the base station receives, in the different directions, data sent by the second UE, and a second direction is a direction ranked second when the base station receives, in the first time period, the data sent by the second UE; and
sending, by the base station, the second message to the second UE, so that when the first time period starts, the second UE determines, based on the second information, a second listening duration corresponding to the second direction, and accesses the channel when determining, within the second listening duration, that the channel is idle, wherein the second information is used to indicate listening durations required by the UE to listen on the channel in the different directions in the second list, and a listening duration corresponding to a direction ranked higher is shorter, and the second listening duration is greater than the first listening duration.

10. The method according to any one of claims 6 to 8, wherein the base station is allowed to receive the data in a plurality of directions in a same time period, and the method further comprises:
sending, by the base station, the first information to second UE, and maintaining, by the second UE, a second list, wherein the second list comprises a sequence of the directions in which the base station receives the data, the sequence is used to indicate channel quality when the base station receives, in the different directions, data sent by the second UE, and a second direction is a direction ranked first when the base station receives, in the first time period, the data sent by the second UE; and
sending, by the base station, the second message to the second UE, so that when the first time period starts, the second UE determines, based on the second information, a second listening duration corresponding to the second direction, and accesses the channel when determining, within the second listening duration, that the channel is idle, wherein the second information is used to indicate listening durations required by the UE to listen on the channel in the different directions in the second list, and a listening duration corresponding to a direction ranked higher is shorter, and the second listening duration is equal to the first listening duration.

11. The method according to any one of claims 6 to 8, wherein the first message further comprises a time-frequency resource location and/or a modulation and coding scheme.

12. User equipment UE, comprising:
a first receiving unit, configured to receive first information sent by a base station, wherein the first information is used to indicate directions of data received by the base station in different time periods, and the UE maintains a first list, wherein the first list comprises a sequence of the directions in which the base station receives the data, the sequence is used to indicate channel quality when the base station receives, in the different directions, the data sent by the UE, and a first direction is a direction ranked first when the base station receives, in a first time period, the data sent by the UE;
a second receiving unit, configured to receive second information sent by the base station, wherein the second information is used to indicate listening durations required by the UE to listen on a channel in the different directions in the first list, and a listening duration corresponding to a direction ranked higher is shorter;
a determining unit, configured to determine, when the first time period starts, based on the second information, a first listening duration corresponding to the first direction; and
an access unit, configured to access the channel if the channel is idle within the first listening duration.

13. The UE according to claim 12, wherein the first receiving unit is specifically configured to receive a wide beam sent by the base station, wherein the wide beam comprises the first information; or
the first receiving unit is specifically configured to receive a narrow beam sent by the base station, wherein the narrow beam comprises the first information.

14. The UE according to claim 12, wherein the second receiving unit is specifically configured to receive a wide beam sent by the base station, wherein the wide beam comprises the second information; or
the second receiving unit is specifically configured to receive a narrow beam sent by the base station, wherein the narrow beam comprises the second information.

15. The UE according to claims 12 to 14, wherein the UE further comprises:
a sending unit, configured to send the data to the base station.

16. The UE according to claims 12 to 14, wherein the first message further comprises a time-frequency resource location and/or a modulation and coding scheme.

17. Abase station, comprising:
a first sending unit, configured to send first information to first user equipment UE, wherein the first information is used to indicate directions of data received by the base station in different time periods, and the first UE maintains a first list, wherein the first list comprises a sequence of the directions in which the base station receives the data, the sequence is used to indicate channel quality when the base station receives, in the different directions, the data sent by the first UE, and a first direction is a direction ranked first when the base station receives, in a first time period, the data sent by the first UE; and
a second sending unit, configured to send a second message to the first UE, so that when the first time period starts, the first UE determines, based on the second information, a first listening duration corresponding to the first direction, and accesses the channel when determining, within the first listening duration, that the channel is idle, wherein the second information is used to indicate listening durations required by the UE to listen on a channel in the different directions in the first list, and a listening duration corresponding to a direction ranked higher is shorter.

18. The base station according to claim 17, wherein the first sending unit is specifically configured to send a wide beam to the first UE, wherein the wide beam comprises the first information; or
the first sending unit is specifically configured to send a narrow beam to the first UE, wherein the narrow beam comprises the first information.

19. The base station according to claim 17, wherein the second sending unit is specifically configured to send a wide beam to the first UE, wherein the wide beam comprises the second information; or
the second sending unit is specifically configured to send a narrow beam to the first UE, wherein the narrow beam comprises the second information.

20. The base station according to claims 17 to 19, wherein the first sending unit is further configured to send the first information to second UE, and the second UE maintains a second list, wherein the second list comprises the sequence of the directions in which the base station receives the data, the sequence is used to indicate channel quality when the base station receives, in the different directions, data sent by the second UE, and a second direction is a direction ranked second when the base station receives, in the first time period, the data sent by the second UE; and
the second sending unit is further configured to send the second message to the second UE, so that when the first time period starts, the second UE determines, based on the second information, a second listening duration corresponding to the second direction, and accesses the channel when determining, within the second listening duration, that the channel is idle, wherein the second information is used to indicate listening durations required by the UE to listen on the channel in the different directions in the second list, and a listening duration corresponding to a direction ranked higher is shorter, and the second listening duration is greater than the first listening duration.

21. The base station according to claims 17 to 19, wherein the base station is allowed to receive the data in a plurality of directions in a same time period, and the first sending unit is further configured to send the first information to second UE, and the second UE maintains a second list, wherein the second list comprises a sequence of the directions in which the base station receives the data, the sequence is used to indicate channel quality when the base station receives, in the different directions, data sent by the second UE, and a second direction is a direction ranked first when the base station receives, in the first time period, the data sent by the second UE; and
the second sending unit is further configured to send the second message to the second UE, so that when the first time period starts, the second UE determines, based on the second information, a second listening duration corresponding to the second direction, and accesses the channel when determining, within the second listening duration, that the channel is idle, wherein the second information is used to indicate listening durations required by the UE to listen on the channel in the different directions in the second list, and a listening duration corresponding to a direction ranked higher is shorter, and the second listening duration is equal to the first listening duration.

22. The base station according to claims 17 to 19, wherein the first message further comprises a time-frequency resource location and/or a modulation and coding scheme.

23. User equipment UE, comprising:
a processor, a memory, a bus, and an input/output interface, wherein
the memory stores program code; and
when invoking the program code in the memory, the processor performs the following operations:
receiving first information sent by a base station, wherein the first information is used to indicate directions of data received by the base station in different time periods; and maintaining, by the UE, a first list, wherein the first list comprises a sequence of the directions in which the base station receives the data, the sequence is used to indicate channel quality when the base station receives, in the different directions, the data sent by the UE, wherein a first direction is a direction ranked first when the base station receives, in a first time period, the data sent by the UE; and
receiving second information sent by the base station, wherein the second information is used to indicate listening durations required by the UE to listen on a channel in the different directions in the first list, and a listening duration corresponding to a direction ranked higher is shorter; and
when the first time period starts, determining, based on the second information, a first listening duration corresponding to the first direction; and
if the channel is idle within the first listening duration, accessing the channel.

24. Abase station, comprising:
a processor, a memory, a bus, and an input/output interface, where
the memory stores program code; and
when invoking the program code in the memory, the processor performs the following operations:
sending first information to first user equipment UE, wherein the first information is used to indicate directions of data received by the base station in different time periods; and maintaining, by the first UE, a first list, wherein the first list comprises a sequence of the directions in which the base station receives the data, the sequence is used to indicate channel quality when the base station receives, in the different directions, the data sent by the first UE, and a first direction is a direction ranked first when the base station receives, in a first time period, the data sent by the first UE; and
sending a second message to the first UE, so that when the first time period starts, the first UE determines, based on the second information, a first listening duration corresponding to the first direction, and accesses the channel when determining, within the first listening duration, that the channel is idle, wherein the second information is used to indicate listening durations required by the UE to listen on the channel in the different directions in the first list, and a listening duration corresponding to a direction ranked higher is shorter.

25. A computer-readable storage medium, comprising an instruction, wherein when the instruction is run on a computer, the computer is enabled to perform the method according to any one of claims 1 to 11.

26. A computer program product that comprises an instruction, wherein when the computer program product runs on a computer, the computer is enabled to perform the method according to any one of claims 1 to 11.
